# EUROPÄISCHE PATENTANMELDUNG

(11) **EP 0 939 253 A2**
(43) Veröffentlichungstag der Anmeldung: **01.09.1999**
(21) Anmeldenummer: 99101429.1
(22) Anmeldetag: 27.01.1999
(51) Int. Cl.: F16J 9/20

(54) **Ölabstreifkolbenring**

(30) Priorität: 27.02.1998 DE 19808481
(71) Anmelder: Federal-Mogul Burscheid GmbH, 51399 Burscheid (DE)
(72) Erfinder: Schnell, Lothar, Dipl.-Ing., 42499 Hückeswagen (DE)

(57) **Zusammenfassung**

Die Erfindung betrifft einen Ölabstreifkolbenring 1 für insbesondere Brennkraftmaschinen, bestehend aus einem flexiblen, einem U-Förmigen Querschnitt aufweisenden Metallband mit radial gerichteten, federnden Schenkeln 3, 3'. Im U-förmigen Raum ist ein Stützring 6, 6' angeordnet, der die axiale Abstützung der Schenkel während des Einbaus des Kolbenrings in die Zylinderbohrung 9 der Brennkraftmaschine übernimmt.

## Beschreibung

Die Erfindung betrifft einen Ölabstreifkolbenring insbesondere für Brennkraftmaschinen, bestehend aus einem ringförmig gebogenem Metallband mit einem nach radial außen hin offenem U-förmigen Querschnittsprofil und vom Außendurchmesser abwechselnd von oben oder von unten nach innen sich erstreckende Einschnitte, so daß radial gerichtete federnde Schenkel gebildet sind, die über Stege miteinander verbunden sind.

Aus der DE PS 875 892 ist ein gattungsgemäßer Ölabstreifkolbenring zu entnehmen. Derartige aus Federstahl gebildete Kolbenringe zeichnen sich durch besonders gute federnde Eigenschaften aus, sowohl in radialer, in Umfangs- und in axialer Richtung. Diese Eigenschaften werden dazu genutzt, um eine gute Anlage des Rings in der Nut, als auch an der Zylinderwandung zu erhalten.

Neben den Vorteilen des Rings im Betrieb besteht jedoch das Problem, daß der Ring nur schwer montierbar ist. So treten sowohl bei Einbau des Rings in die Kolbnenut, als auch beim Einbau des bestückten Kolbens in die Zylinderbohrung Probleme auf. Insbesondere die Montage von axial niedrigen Ölabstreifkolbenringen wirft das Problem auf, daß gattungsgemäße Ringe nur manuell in die korrespondierende Nut des Kolbens einlegbar sind. Um diese Arbeit zu automatisieren, ist man bereits dazu übergegangen, den Ring in Umfangsrichtung zu stabilisieren, indem eine sich am Nutgrund des U-förmigen Raumes abstützende Feder eingelegt wurde. Die Feder übernimmt jedoch keine axiale Abstützung. Zum Einbau des fertig bestückten Kolbens in die Zylinderbohrung muß der Kolbenring in Umfangsrichtung zusammengedrückt werden. Hierbei läßt sich eine Durchbiegung der Schenkel in axialer Richtung nicht vermeiden, da der Verformungswiderstand der Schenkel, bezogen auf eine tangentiale Biegeachse, in der Regel geringer ist, als der Verformungswiderstand der etwa rechtwinklig dazu verlaufenden Stege. Derartige Verformungen der Schenkel verhindern eine dichte Anlage an den Kolbennutflanken, woduch der Verschleiß erhöht wird. Darüber hinaus können die Schenkel beim Eindrücken des Kolbens in die Zylinderbohrung beschädigt werden, wenn nämlich die Schenkel mit dem Rand der Zylinderbohrung in Kontakt kommen. Die auf diese Weise verbogenen Schenkel führen unweigerlich zu hohen Ölverbräuchen.

Der Erfindung liegt die Aufgabe zugrunde einen gattungsgemäßen Kolbenring dahingehend zu verbessern, daß bei der Montage eines bestückten Kolbens in die Zylinderbohrung keine Verbiegung der Schenkel auftritt.

Diese Aufgabe wird erfindungsgemäß durch die kennzeichnenden Merkmale des Patentanspruchs 1 gelöst. Vorteilhalfte Ausgestaltungen der Erfindung ergeben sich aus den Unteransprüchen.

Durch die Anordnung eines mit Öldurchlaßöffnungen versehenen Stützrings am äußeren Rand der Schenkel wird zuverlässig verhindert, daß beim Einpressen des Kolbens in die Zylinderbohrung die Schenkel verbogen werden. Je nach Anwendungsfall können die Stützkörper unterschiedliche geometrische Formen aufweisen. Da der Stützkörper im Motor verbleibt, müssen die Öldurchlaßöffnungen ausreichend dimensioniert sein. Ein als Zug-Schlauchfeder ausgebildeter Stützring eignet sich besonders gut, da das abgestreifte Öl durch die Windungen der Feder fließen kann.

Die Erfindung ist anhand eines Ausführungsbeispiels in der Zeichnung dargestellt und wird im folgenden näher erläutert. Es zeigen:
- Fig. 1: perspektivische Ansicht eines erfindungsgemäßen Kolbenrings
- Fig. 2: Ansicht eines eingebauten Kolbenrings im Kolben, während des Einbaus in die Zylinderbohrung
- Fig. 3: alternative Ausgestaltung eines Stützrings gem. Fig. 1

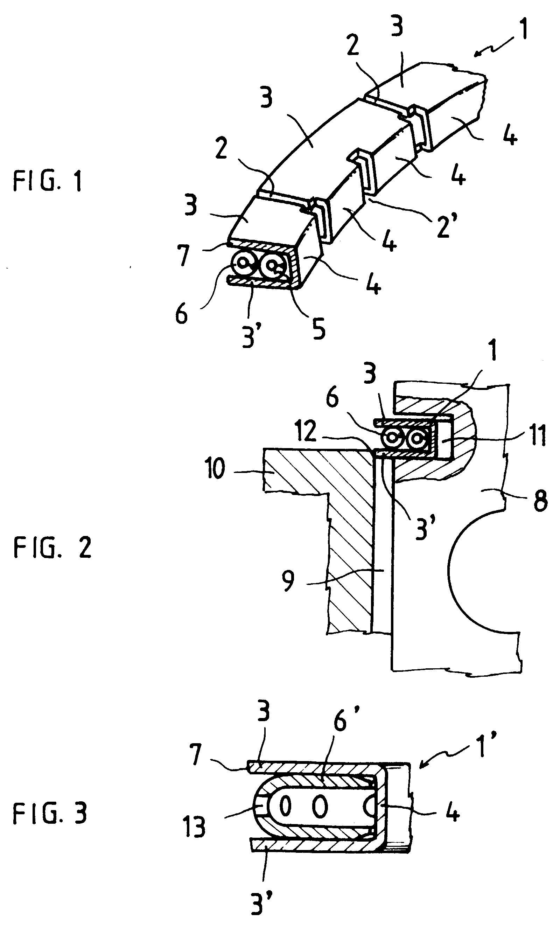

Die Figur 1 zeigt einen erfindungsgemäßen Ölabstreifkolbenring 1 aus einem ringförmig gebogenem Metallband aus Stahl. Der Ölabstreifkolbenring 1 weist abwechselnd von unten und oben innen sich ersteckende Einschnitte 2, 2' auf, so daß die radial gerichteten federnden Schenkel 3, 3' über Stege 4 verbunden sind. Im U-förmigen Querschnittsprofil ist eine Feder 5 am Nutgrund des Ölabstreifkolbenrings 1 angeordnet. Radial neben der Feder 5 erstreckt sich konzentrisch der erfindungsgemäße Stützring 6 derart, daß er die Schenkel 3, 3' am Randbereich 7 axial abstützt, ohne über den Rand der Schenkel 3, 3' hinauszuragen.

In der Figur 2 ist ein mit dem erfindungsgemäßen Ölabstreifkolbenring 1 bestückte Kolben 8 dargestellt. Der zuvor in Umfangsrichtung zusammengedrückte Ölabstreifkolbenring 1 weist in der Nut 11 des Kolbens 8 genügend radiales und axiales Spiel auf so daß beim Einschieben des Kolbens 8 in die Zylinderbohrung 9 des Zylinders 10 zunächst der Schenkel 3' in Kontakt mit dem an den Rand 12 der Zylinderbohrung 9 gelangt. Der Ölabstreifkolbenring 1 wird auf diese Weise radial in Richtung der Nut 11 gedrückt. Der Stützring 6 verhindert ein Verbiegen der Schenkel 3, 3'.

Die Figur 3 offenbart eine alternative Ausgestaltung des Stützrings. Im Gegensatz zum Stützring 6, der mit einer Feder 5 zusammenwirkt, ist der Stützring 6' so ausgebildet, daß er den U-förmigen Querschnittsraum des Ölabstreifrings 1 in radialer Richtung vollkommen ausfüllt. Über den Umfang des Stützrings 6' sind eine Vielzahl von Öldurchlaßöffnungen 13 angeordnet.

## Patentansprüche

1. Ölabstreifkolbenring für insbesondere Brennkraftmaschinen, bestehend aus einem ringförmig gebogenem Metallband mit einem radial nach außen hin offenem U-förmigen Querschnittsprofil und vom Außendurchmesser abwechelnd von oben oder von unten nach innen sich erstreckende Einschnitte, so daß radial gerichtete federnde Schenkel gebildet sind, die über Stege miteinander verbunden sind, dadurch gekennzeichnet, daß innerhalb des durch das U-förmige Querschnittsprofil gebildeten Raumes, ein mit Öldurchlaßöffnungen (13) versehener Stützring (6, 6') angeordnet ist, welcher die Schenkel (3, 3') etwa am äußeren Rand axial abstützt, ohne radial über den Rand der Schenkel (3, 3') hinauszuragen.

2. Ölabstreifkolbenring nach Anspruch 1, dadurch gekennzeichnet, daß der Stützring (6, 6') mit axialen Spiel im Bereich von 10 bis 600 µm im Ölabstreifkolbenring (1) angeordnet ist.

3. Ölabstreifkolbenring nach den Ansprüchen 1 und 2, dadurch gekennzeichnet, daß der Stützring (6, 6') als Zug-Schlauchfeder ausgebildet ist.

4. Ölabstreifkolbenring nach Anspruch 1 und 2, dadurch gekennzeichnet, daß der Stützring (6, 6') als ein radial innenspannender, einen U-förmigen Querschnitt aufweisender Ring ausgebildet ist und der offene Querschnitt nach radial innen gerichtet ist.

5. Ölabstreifkolbenring nach Anspruch 1 bis 4, dadurch gekennzeichnet, daß der Stützring (6, 6') aus Kunststoff besteht.

6. Ölabstreifkolbenring nach Anspruch 1 bis 4, dadurch gekennzeichnet, daß der Stützring (6, 6') aus metallischem Werkstoff gebildet ist.
